# EUROPEAN PATENT APPLICATION

(11) **EP 1 705 832 A2**
(43) Date of publication of application: **27.09.2006**
(21) Application number: 06251423.7
(22) Date of filing: 16.03.2006
(51) Int. Cl.: H04L 12/24

(54) **Device profile retrieval in a management network**

(30) Priority: 22.03.2005 US 664247 P
(71) Applicant: Bitfone Corporation, Laguna Niguel, CA 92677 (US)
(72) Inventor: Rao, Bindu Rama, Laguna Niguel, California 92677 (US); Brunet, Jeffrey, Richmond Hill, Ontario L4E 3V7 (CA)
(74) Representative: McLeish, Nicholas Alistair Maxwell

(57) **Abstract**

A communication network supports mobile electronic devices, each containing different types of profile information relating to operation of the device and access to services of the network. Server functionality for device management, customer care, provisioning, diagnostics, downloading, and subscriber self-care are communicatively coupled to facilitate the sharing of device management tasks and information. Different types of profile information may be accessed/updated in a single session using a device management protocol. The mobile electronic device may track specific network and device events, and notify the server functionality of the occurrence of such events. Information about the occurrence of the tracked events, and profile information may be made accessible to external entities such as a device manufacturers and 3^{rd} parties.

## Description

### BACKGROUND OF THE INVENTION

Electronic devices, such as mobile phones and personal digital assistants (PDA's), often contain firmware and application software that are either provided by the manufacturers of the electronic devices, by telecommunication carriers, or by third parties. If firmware or firmware components are to be changed in electronic devices, it is often very tricky to update the firmware components.

It is often difficult to determine what is wrong with a device when a problem is encountered. Quite often, a customer care representative for an operator does not have answers to a customer's problem and is not able to fix it. Determination of problems with a customer's mobile device is a big problem for operators. Answering customer care calls is quite expensive. Especially so if at the end of such a call, the customer care representative is unable to determine what is wrong with the device.

Different devices have different sets of resources, different sets of parameters, etc. Managing mobile devices in a heterogeneous network is a huge problem. Figuring out what parameters need to be set is also a problem.

Customer care centers get numerous calls for support from customers. They have very few means to determine what is wrong with a device. The Customer Care Representative (CCR) often asks questions of a customer, but they do not get proper answers. Customers often do not know what is wrong with their device. Thus, configuration changes that can fix a problem cannot be easily determined. Again, firmware updates that can fix the problem cannot be identified.

Quite often, even when a problem is diagnosed, a solution may not be available. Thus, customers who call to report a problem go away without having solved it.

If an operator needs to update millions of phones to fix a known bug, it will be very expensive and take a lot of resources. There is no easy way to conduct mass updates of millions of devices, such as mobile handsets.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A network, system and/or method supporting management of device profile information in an electronic device, substantially as shown in and/or described in connection with at least one of the figures, as set forth more completely in the claims.

These and other advantages and novel features of the present invention, as well as details of an illustrated embodiment thereof will be more fully understood from the following description and drawings.

### BRIEF DESCRIPTION OF SEVERAL VIEWS OF THE DRAWINGS

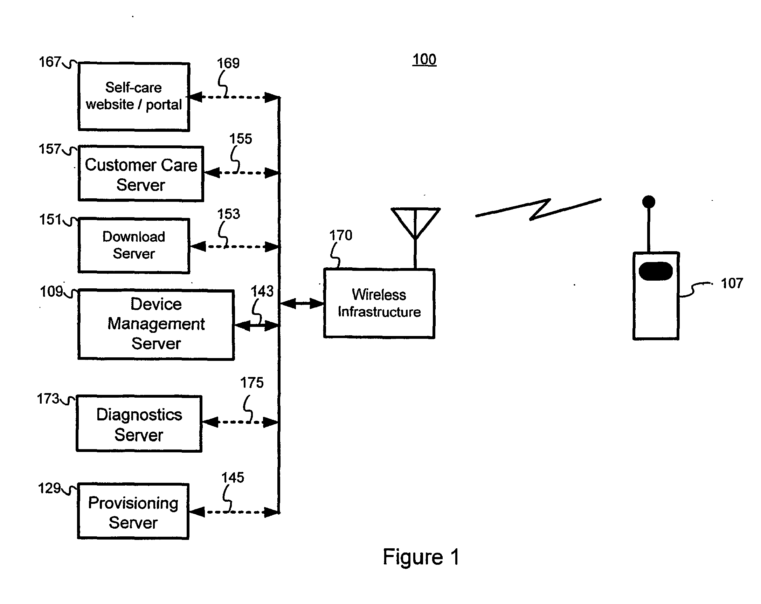

Figure 1 shows a communication network supporting management of an electronic device served via a wireless infrastructure, in which a representative embodiment of the present invention may be practiced.

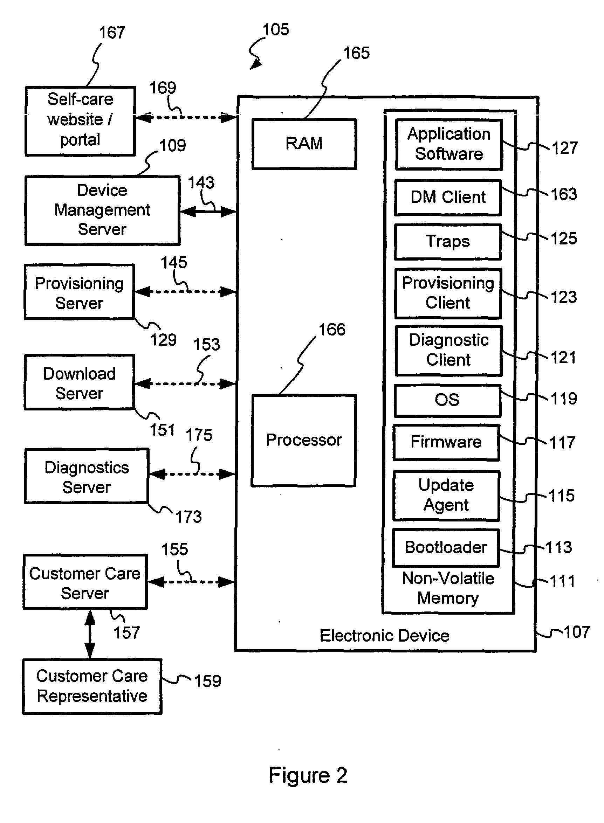

Figure 2 is a perspective block diagram of an exemplary network that is capable of diagnosing problems within a electronic device that may correspond to, for example, the electronic device of Figure 1, and of disseminating solutions based on a dissemination policy, in accordance with a representative embodiment of the present invention.

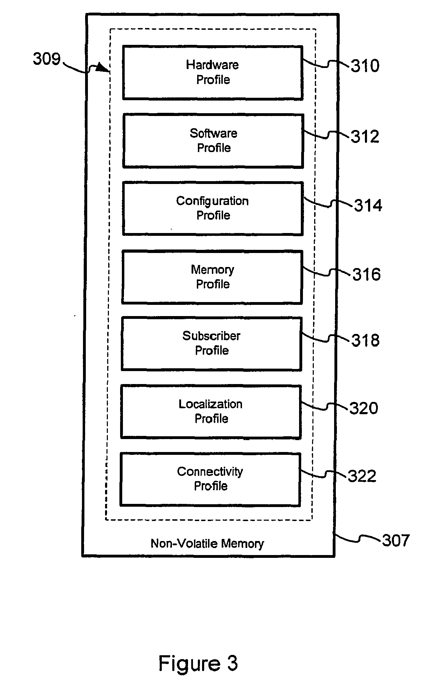

Figure 3 shows a block diagram illustrating the structure of an exemplary device profile resident in the non-volatile memory of an electronic device that may correspond to, for example, the electronic device of Figure 2, in accordance with a representative embodiment of the present invention.

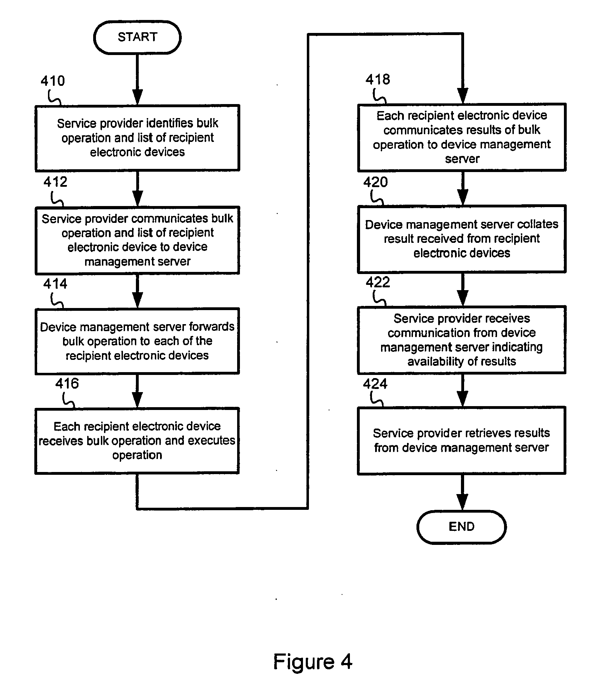

Figure 4 is a flowchart showing an exemplary work flow for the bulk operations support provided by the network of Figure 2, in accordance with a representative embodiment of the present invention.

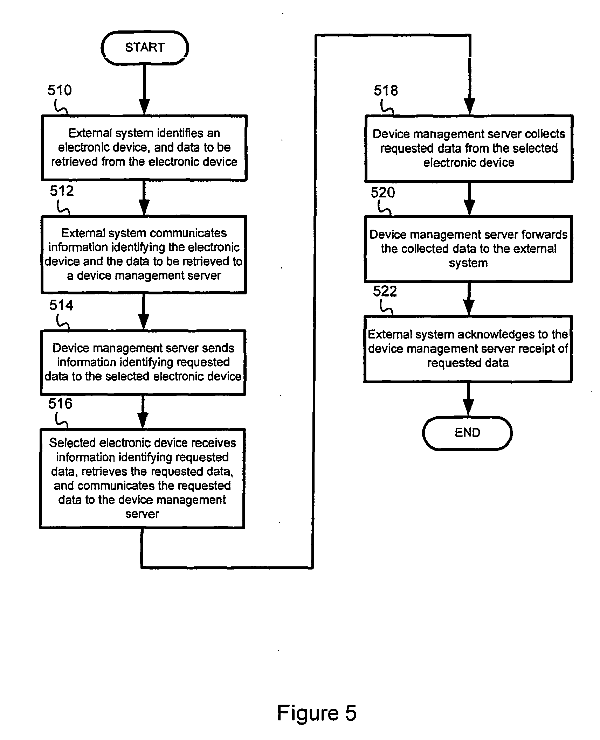

Figure 5 is a flowchart illustrating an exemplary method of operation of a network such as, for example, the network of Figure 2, in facilitating access to information in an electronic device such as the electronic device, by an external system, in accordance with a representative embodiment of the present invention.

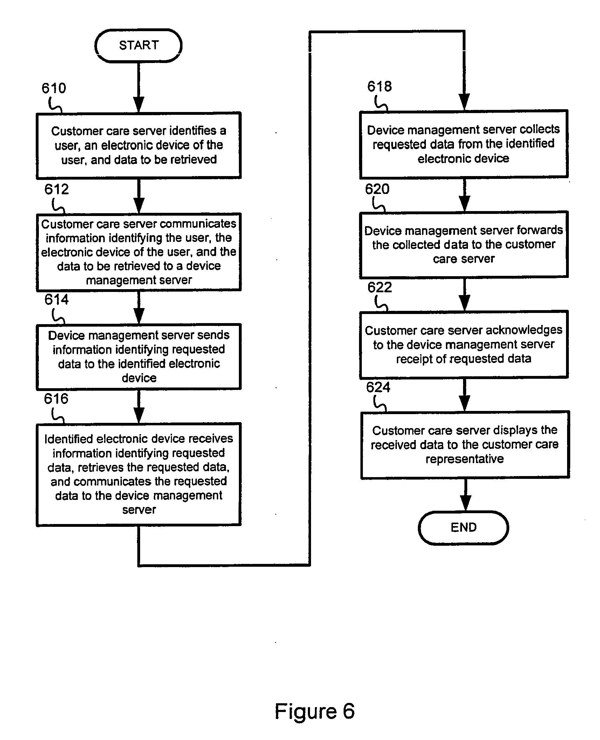

Figure 6 is a flowchart illustrating an exemplary method of operation of a network such as, for example, the network of Figure 2, in facilitating access to an electronic device such as, for example, the electronic device, from a customer care server like the customer care server of Figure 2, in accordance with a representative embodiment of the present invention.

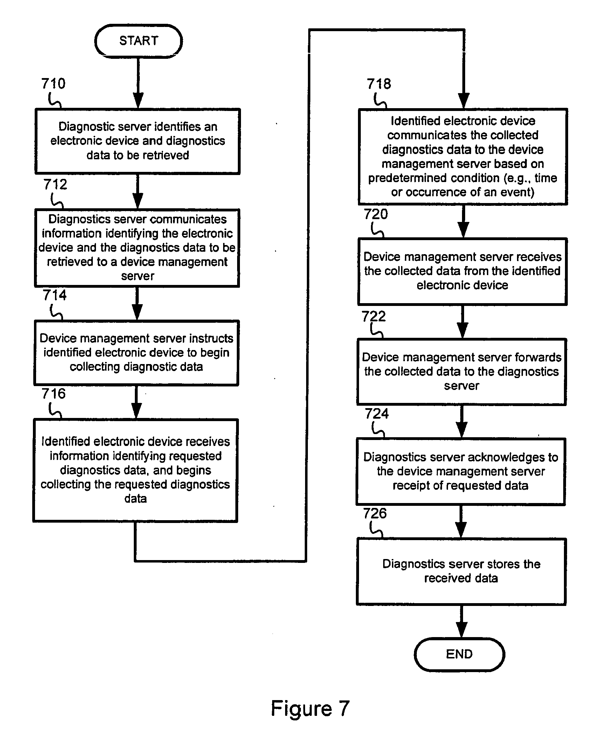

Figure 7 is a flowchart illustrating an exemplary method of operation of a network such as, for example, the network of Figure 2, in facilitating remote diagnostics of an electronic device such as, for example, the electronic device from a customer care server like the customer care server of Figure 2, in accordance with a representative embodiment of the present invention.

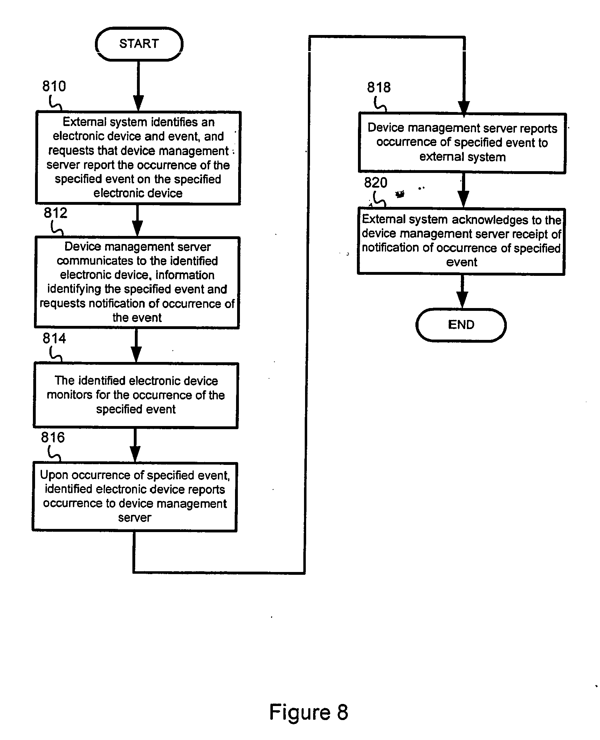

Figure 8 is a flowchart illustrating an exemplary method of operation of a network such as, for example, the network of Figure 2, in facilitating monitoring of the occurrence of events in an electronic device such as, for example, the electronic device of Figure 2, in accordance with a representative embodiment of the present invention.

### DETAILED DESCRIPTION OF THE INVENTION

The present invention relates generally to the management of mobile electronic devices. More specifically, aspects of the present invention relate to the use of management objects and device profile information in supporting customer care and services support for mobile electronic devices in a communication network. Representative embodiments of the present invention may, for example, be employed to provide management of parameters, software/firmware updates, quality of service monitoring, and event tracking.

Figure 1 shows a communication network 100 supporting management of an electronic device 107 served via a wireless infrastructure 170, in which a representative embodiment of the present invention may be practiced. The communication network 100 comprises a customer care server 157 communicatively coupled to the wireless infrastructure 170 via a communication path 155. The customer care server 157 may support the activities of a customer care representative (not shown) using, for example, a dedicated terminal device, or a personal computer having appropriate application software. The communication path 155 may comprise a dedicated wired or wireless communication link such as, for example, an intranet, the Internet, a wired or wireless local area network, a packet network, or any other suitable form of communication link. The communication network 100 may also comprise a self-care website/portal 167 communicatively coupled to the wireless infrastructure 170. The self-care website/portal 167 may permit a subscriber having electronic device 107 to diagnose, provision, and update the electronic device 107 via, for example, a wired or wireless communication path 169 that may include, for example, any of the communication means described above with respect to communication path 155.

The communication network 100 also comprises a provisioning server 129, that may also be referred to herein as a "broadcast server", and a device management (DM) server 109 that may support, for example, an Open Mobile Alliance (OMA) device management (DM) protocol, or a proprietary protocol. The communication network 100 also comprises a download server 151 for downloading update packages to the electronic device 107. In a representative embodiment of the present invention, an update package may, among other things, comprise a set of instructions executable by an update agent (not shown) in the electronic device 107 to convert or transform an existing version of software and/or firmware code to an updated version.

As shown in the illustration of Figure 1, the self-care website/portal 167, the customer care server 157, the provisioning server 129, a DM server 109, a diagnostics server 173 and the download server 151 may be communicatively coupled via respective communication paths 169, 155, 145, 143, 175, and 153 to the wireless infrastructure 170. Although shown as separate entities, the self-care website/portal 167, the customer care server 157, the provisioning server 129, the DM server 109, the diagnostics server 173 and the download server 151 may reside on a single server, or on multiple servers co-located or separately located, depending upon anticipated load, economics, server capability, etc. The communication paths 169, 145, 143, 175 and 153 may comprise any of the communication links described above with respect to the communication path 155. The wireless infrastructure 170, in a representative embodiment of the present invention may comprise, for example, a cellular network, a paging network, a wireless local and/or wide area network, or other suitable wireless communication network. Although the wireless infrastructure 170 is shown as a single entity having a single antenna location, this does not represent a specific limitation of the present invention. A representative embodiment of the present invention may comprise a greater number of antenna locations including those belonging to separate services providers, without departing from the scope of the present invention.

Figure 2 is a perspective block diagram of an exemplary network 105 that is capable of diagnosing problems within a electronic device 107 that may correspond to, for example, the electronic device 107 of Figure 1, and of disseminating solutions based on a dissemination policy, in accordance with a representative embodiment of the present invention. The network 105 may enable mass distribution of firmware and/or software updates to fix problems that have been diagnosed within electronic devices such as the electronic device 107 of Figure 2, for example. As illustrated in Figure 2, the network 105 comprises a self-care website/portal 167, a device management (DM) server 109, a diagnostics server 173, a customer care server 157, a download server 151, and a provisioning server 129, that may correspond to, for example, the self-care website/portal 167, DM server 109, diagnostics server 173, customer care server 157, download server 151 and provisioning server 129 of Figure 1. Although not shown in Figure 2, the self-care website/portal 167, device management (DM) server 109, diagnostics server 173, customer care server 157, download server 151, and provisioning server 129 may be communicatively coupled to enable the self-care website/portal 167, device management (DM) server 109, diagnostics server 173, customer care server 157, download server 151, and provisioning server 129 to cooperate in providing management/diagnostic services and functions for the electronic device 107. The electronic device 107 may comprise any of a number of different portable/handheld/mobile electronic devices such as, for example, a cellular phone, a personal digital assistant, and a pager, to name only a few. In a representative embodiment of the present invention, the electronic device 107 may include non-volatile memory 111 that may, for example, comprise NAND or NOR flash memory, battery-backed memory, electrically programmable read-only memory (EPROM), or various other suitable forms of non-volatile memory. The non-volatile memory 111 of the electronic device 107 shown in Figure 2 comprises a number of firmware/software components including application software 127, a device management (DM) client 163, a traps client 125, a provisioning client 123, a diagnostic client 121, an operating system (O/S) 119, firmware 117, an update agent 115, and a boot loader 113. The electronic device 107 also comprises a random access memory 165.

In a representative embodiment of the present invention, the electronic device 107 may be capable of updating portions of the non-volatile memory 111 in the electronic device 107 such as, for example, the application software 127, operating system (OS) 119, or firmware 117, by employing an update package (not shown) delivered by, for example, the download server 151 via communication path 153. An update package used for updating the electronic device 107 may be produced by a generator (not shown), and may comprise a set of instructions executable by the electronic device 107 to convert/transform an existing code version to an updated code version in the memory of the electronic device 107. Additional details of the generation and application of update packages may be found in the PCT Application with publication number WO/02/41147 A1, PCT number PCT/US01/44034, filed November 19, 2001, and in United States Provisional Patent Application Serial No. 60/249,606, filed November 17, 2000. As described above with respect to Figure 1, the communication path 153 may comprise wired or wireless communication links including, for example, packet networks, circuit switched networks, cellular or paging networks, local or wide area networks, and other suitable forms of communication networks.

In a representative embodiment of the present invention, the electronic device 107 may receive provisioning information from the customer care server 157 or the provisioning server 129, to correct configuration problems or to reconfigure software and hardware. The electronic device 107 may apply updates using one or more update agents 115 that are each capable of processing update packages or portions/subsets thereof. The electronic device 107 may receive update packages, and update the memory of the electronic device 107 using the update agent(s) 115. The update agent(s) 115 may be capable of updating any of the firmware and/or software in the electronic device 107 including, for example, the diagnostic client 121 that facilitates remote diagnosis, and a traps client 125 that facilitates setting traps and retrieving collected information.

As shown in Figure 2, the electronic device 107 may comprise a DM client 163 that is capable of interacting with, for example, the DM server 109, the provisioning client 123, the diagnostic client 121 and the traps client 125. In a representative embodiment of the present invention, the DM client 163 may receive device management commands from, for example, the DM server 109, and may implement the received DM commands on the electronic device 107. The DM commands may, for example, comprise elements of the OMA Device Management (DM) protocol being developed under the auspices of the Open Mobile Alliance Ltd.. Such protocol elements may support the management (e.g., creation, setting, updating, retrieving, and deletion) of information stored as management objects in a device management structure (e.g., a device management (DM) tree) in the memory of the electronic device 107.

In a representative embodiment of the present invention, a download server such as, for example, the download server 151 of Figure 2 may download firmware and/or software updates (e.g., within update packages) to the electronic device 107 via the communication path 153, for later application to the memory of the electronic device 107. A customer care server 157 may facilitate access to information (e.g., code, parameters and data) contained within the electronic device 107, by customer care representative (CCR) 159. Although only one customer care representative 159 is shown in Figure 2, a greater number of customer care representatives may be supported by the customer care server 157, without departing from the scope of the present invention.

A representative embodiment of the present invention may comprise a provisioning server 129 that may be used to facilitate communication of provisioning information (e.g., service-related parameters, device-parameters, user preferences), using, for example, an over the air (OTA) delivery mechanism via the communication path 145. The communication path 145 may, for example, comprise any suitable wired or wireless communication link including, for example, those described above with respect to communication path 153.

Although the communications paths 143, 145, 153, 155, 169 are shown as being separate, this is not a specific limitation of the present invention. The functionality of any of the self-care website/portal 167, device management (DM) server 109, customer care server 157, download server 151, and provisioning server 129 may be combined on a single or cluster of servers, and may be communicatively coupled to any of the other of the self-care website/portal 167, device management (DM) server 109, customer care server 157, download server 151, and provisioning server 129.

When a CCR such as the CCR 159 wishes to diagnose a problem with an electronic device such as the electronic device 107, for example, the CCR 159 may retrieve various configuration values, parameters, etc. from the electronic device 107 one at a time. In a representative embodiment of the present invention, the CCR 159 may instead elect to retrieve a device profile comprising a larger set of information from the electronic device 107.

Figure 3 shows a block diagram illustrating the structure of an exemplary device profile 309 resident in the non-volatile memory 307 of an electronic device that may correspond to, for example, the electronic device 107 of Figure 2, in accordance with a representative embodiment of the present invention. As is illustrated in Figure 3, such a device profile 309 may comprise a hardware profile 310, a software profile 312, a configuration profile 314, a memory profile 316, a subscriber profile 318, a localization profile 320, and a connectivity profile 322. The device profile 309 may also comprise addition profile components without departing from the scope of the present invention. For example, a device profile in accordance with the present invention may comprise the DevInfo and DevDetail elements in the OMA DM Specification. In this manner, a device profile of a representative embodiment of the present invention such as, for example, the device profile 309 of Figure 3, may facilitate retrieval of multiple individual profiles stored in an electronic device in a single DM session, as a single package, instead of employing several different individual DM sessions to retrieve this set of information.

For example, when a CCR (e.g., the CCR 159) receives a call from the user of an electronic device such as, for example, the electronic device 107, the customer care server 157 may be used by the CCR to a) set parameters in the electronic device 107 to solve a problem in the electronic device 107, b) automatically turn on collection of one or more quality of service (QoS) parameters from the electronic device 107, c) set traps to determine, for example, average download time in the electronic device 107, average number of dropped packages per download, average number of attempts per successful download and/or d) retrieve collected data from traps and other device-related information from the electronic device 107 during the call to the CCR from the user of the electronic device 107. In a representative embodiment of the present invention, when the network 105 determines, for example, that an electronic device 107 is in the vicinity of a fixed set of routes (e.g., main roads and towns) based on a determination of the location of the electronic device 107, during a predetermined-monthly cycle, it may cause the electronic device 107 to, for example, collect data, establish a voice or data call for a specific duration, etc. (e.g., involving mobile originating or mobile termination) During the call, the electronic device 107 may measure QoS parameters such as, for example, failure to set up a call, failure to maintain the call, or collect information for the required duration (e.g., 2 minutes). In a representative embodiment of the present invention, while the CCR receives a call from the user of the electronic device 107 to report a problem, the customer care server 157 may provide the CCR with a drop down list of QoS-related parameters that may be collected from the electronic device 107, providing the CCR with the opportunity to turn on the collection of the QoS parameters from the electronic device 107 for some duration such as, for example, a month.

The network 105 in a representative embodiment of the present invention may support mass distribution of firmware and software updates using methods employed by the device management server 109 or the customer care server 157. The network 105 may employ a device management protocol such as, for example, the Open Mobile Alliance (OMA) device management (DM) protocol that may be supported by the DM server 109, for device discovery. The DM server 109 may use an OMA-DM message comprising, for example, a 'Replace' command to set 'configuration' parameters used to fix bugs in software or firmware. In a representative embodiment of the present invention, an update agent/client such as, for example the update agent/client 115 of Figure 2 may update the electronic device 107 using update packages that are retrieved based on a parameters set. An update package may, for example, comprise information used to convert/transform a first version of software/firmware to an updated version of software/firmware. The electronic device 107 may ensure that update packages received are not corrupt, and may store them away for subsequent processing. In a representative embodiment of the present invention, a provisioning server like the provisioning server 129, for example, may support provisioning of devices using client provisioning (CP) means and OMA-DM bootstrap provisioning means, and other legacy means. The provisioning server 129 may employ one of several available broadcast means to communicate an update package to a plurality of electronic devices 107 such as, for example, short message service (SMS), multimedia messaging service (MMS), via wireless wide area and local area networks, to name only a few.

In a representative embodiment of the present invention, the customer care server 157 may facilitate access to device profile information like the device profile information 309 of Figure 3, for example, that an electronic device such as the electronic device 107 may provide upon request of the customer care server 157. Such device profile information may be requested for display to a customer care representatives (CCR) such as CCR 159, or for analysis of potential problems in the electronic device 107. In one representative embodiment of the present invention, the device profile information 309 may comprise a platform-dependent set of parameters, configuration information, hardware information, list of software components, while in another representative embodiment the device profile information 309 may comprise a common, generic set of such data.

Table 1, shown below, illustrates an exemplary device profile for an electronic device that may correspond to, for example, the device profile 309 of Figure 3 for an electronic device such as, for example, the electronic device 107 of Figure 2, in accordance with a representative embodiment of the present invention. The device profile information shown in Table 1 may correspond to the device profile information for an electronic device based upon a Microsoft mobile operating system platform, for example.

**Table 1.**

| **Profile** | **Management object** | | **Value** |
|---|---|---|---|
| **Hardware** | Platform | | SmartPhone |
| | Manufacturer | | Motorola, Inc. |
| | Model | | BEN-020G |
| | Revision | | 1.00 |
| | OEM Info | | 270483595 |
| | Processor Family | | ARM |
| | Processor Model | | STRONGARM |
| | Processor Level | | 4 |
| | IMEI | | 350443-10-312134-9 |
| | IMSI | | 302370122236366 |
| | Bluetooth name | | BEN-020G |
| | OS Major Version | | 4 |
| | OS Build Version | | 100 |
| | OS Minor Version | | 20 |
| | OS Build Number | | 0 |
| **Memory** | Memory Usage | | 51% |
| | Total Physical Memory | | 18192 KB |
| | Available Physical Memory | | 8972 KB |
| | Total Virtual Memory | | 32768 KB |
| | Available Virtual Memory | | 29952 KB |
| | Available SD Card Memory | | 29776 KB |
| **Localization** | Register Status | | Home |
| | GPRS Class | | GSM or GPRS |
| **Subscriber Information** | Battery Strength | | 92% |
| | AC Line Status | | Disconnected |
| | Voicemail Phone Number | | 14168287757 |
| **Group of Connections** | Access Point Name | | internet.fido.ca |
| | Software Compression | | 0 |
| | IP Address | | 0.0.0.0 |
| | Username | | fido |
| | Domain Address | | None |
| | Line | | Cellular Line |
| | Dial | | -GPRS! |
| | DNS Address 1 | | 0.0.0.0 |
| | DNS Address 2 | | 0.0.0.0 |
| | WINS Address 1 | | 0.0.0.0 |
| | WINS Address 2 | | 0.0.0.0 |
| | Required Password | | No |
| | Enabled | | Yes |
| | Country | | 0 |
| | Area Code | | 416 |
| | Specific IP Addr | | 0 |
| | Specific Name Servers | | 0 |
| | IP Header Compression | | 0 |
| **Software** | Resco Explorer 2003 | | |
| | | Application Status | Not Running |
| | | Application UID | 0x10005B63 |
| | Battery Pack V5 | | |
| | | Application Status | Not Running |
| | | Application UID | 0x101F4CE8 |
| | | | |
| | Resco Picture Viewer | | |
| | | Application Status | Not Running |
| | | Application UID | 0x101F84EB |
| | Pocket World | | |
| | | Application Status | Running |
| | | Application UID | 0x101D0538 |
| | Lexionary | | |
| | | Application Status | Not Running |
| | | Application UID | 0xB268993 |
| | Tombraider | | |
| | | Application Status | Not Running |
| | | Application UID | 0x101FA9A1 |
| | MDI Smartphone Profiler | | |
| | | Application Status | Running |
| | | Application Version | 8.1.0 |
| | | Application UID | 0x101FF52F |

Table 1 comprises a number of individual profile portions including Hardware, Memory, Localization, Subscriber Information, Group of Connections, and Software. These profile portions are similar to the hardware profile 310, software profile 312, etc. shown in Figure 3. In each of the profile portions of Table 1, a number of management objects are listed. For example, the Hardware profile portion lists management objects for Platform, Manufacturer, Model, Revision, OEM Info, Processor Family, Processor Model, Processor Level, IMEI, IMSI, Bluetooth name, OS Major Version, OS Build Version, OS Minor Version, and OS Build Number. Each of these management objects may be included in the management, during a single device management session, of an electronic device such as the electronic device 107, for example, using a device profile in accordance with a representative embodiment of the present invention. In a representative embodiment of the present invention, values of management objects may be changed for a pre-defined period of time such as a call session or an update activity, for example.

Table 2, shown below, illustrates another exemplary device profile for an electronic device, that may correspond to, for example, the device profile 309 of Figure 3 for an electronic device such as, for example, the electronic device 107 of Figure 2, in accordance with a representative embodiment of the present invention. The device profile information shown in Table 2 may correspond, for example, to the device profile information for an electronic device based upon a Palm operating system platform, for example.

**Table 2.**

| **Profile** | **Management object** | **Value** |
|---|---|---|
| **Hardware** | Platform | PalmOS |
| | Manufacturer | HANDSPRING |
| | Model | MINI PVTA P01.15 |
| | Revision | 02.09 |
| | OEM Info | 270483595 |
| | Processor | ARM925T |
| | Processor Revision | 1 |
| | IMEI | 010215001003666 |
| | Device ID | 1234567890123 |
| | Horizontal Resolution | 160 lines |
| | Vertical Resolution | 160 lines |
| | Color Display | true |
| | Number of Colors | 9 colors |
| | Display Font | System Font |
| | Display Font Size | 11 pt |
| | OS Major Version | 5 |
| | OS Minor Version | 2 |
| | OS Build Number | 0 |
| | ROM Fixed Version | 1 |
| | ROM Stage Version | 3 |
| **Memory** | Available Physical Memory | 26609 KB |
| | Total Physical Memory | 27328 KB |
| | Total Virtual Memory | 10880 KB |
| **Localization** | Time Zone | GMT -5:00 |
| | Country | Canada |
| | Language | English |
| **Subscriber Information** | Phone Number | 14168287757 |
| | Signal Strength | 88 % |
| **Group of Connections** | Current Connection Name | GPRS |
| | Access Point Name | internet.fido.ca |
| | Username | fido |
| | Password | fido |
| | Query DNS | 1 |
| | Inactivity Timeout | 0 seconds |
| | Establishment Timeout | 90 |
| | Connection Type | GSM |

Table 2 also comprises a number of individual profile portions including hardware, memory, localization, subscriber information, and group of connections. These profile portions are similar to the hardware profile 310, software profile 312, etc. shown in Figure 3. In each of the profile portions of Table 2, a number of management objects are listed. For example, the Hardware profile portion of Table 2 lists management objects for Platform, Manufacturer, Model, Revision, OEM Info, Processor, Processor Revision, IMEI, Device ID, Horizontal Resolution, Vertical Resolution, Color Display, Number of Colors, Display Font, Display Font Size, OS Major Version, OS Minor Version, OS Build Number, ROM Fixed Version, and ROM Stage Version. Each of these management objects may be accessed/updated in electronic devices such as, for example, the electronic device 107 of Figure 2, during a single device management session, using a device profile in accordance with a representative embodiment of the present invention.

Table 3, shown below, illustrates an exemplary device profile for an electronic device, that may correspond to, for example, the device profile 309 of Figure 3 for an electronic device such as, for example, the electronic device 107 of Figure 2, in accordance with a representative embodiment of the present invention. The device profile information shown in Table 3 may correspond, for example, to the device profile information for an electronic device based upon a RIM operating system platform, for example

**Table 3.**

| **Profile** | **Management object** | | **Value** |
|---|---|---|---|
| **Hardware** | Platform | | RIM |
| | Manufacturer | | Research In Motion |
| | Model | | BlackBerry 7280 |
| | Platform | | RIM |
| | IMEI | | 010215001146507 |
| | PIN | | 200A23B8 |
| | Horizontal Resolution | | 240 pixels |
| | Vertical Resolution | | 160 pixels |
| | Service Info | | Data/Voice |
| | Color Display | | true |
| | Number of Colors | | 65536 colors |
| | OS Major Version | | 1 |
| | OS Minor Version | | 6 |
| | OS Build Number | | 41 |
| | OS Release Version | | 1 |
| **Memory** | Total Physical Memory | | 13376 KB |
| | Available Physical Memory | | 5105 KB |
| | Available RAM | | 446 KB |
| | VM RAM Usage | | 847 KB |
| | Available Flash Memory | | 5805 KB |
| | VM Flash Usage | | 7410 KB |
| | JAVA Objects In RAM | | 237 KB |
| | JAVA Objects In Flash | | 1494 KB |
| **Localization** | Location Area Code | | 4900 |
| | Country | | Canada |
| | Language | | English |
| | Time Zone | | America/New York |
| | Routing Area Code | | 1 |
| | Band | | GSM1800/GSM1900/GSM850 |
| | GPRS State | | Ready |
| | Service Type | | GPRS |
| | Service Status | | On |
| **Subscriber Information** | Phone Number | | 14163331212 |
| | Cell ID | | 27129 |
| | Base Station ID | | 55 |
| | Signal Strength | | 95 % |
| | Battery Strength | | 100 % |
| | Removable Battery | | Yes |
| **Subscriber Information** | Service Content ID | | CMIME |
| | Message Service Email | | orudchenko@mobiledx.com |
| **Software** | net_rim_bb_memo_app | | |
| | | Application Version | 3.7.1.41 |
| | | Application Size | 17 KB |
| | net_rim_bb_task_app | | |
| | | Application Version | 3.7.1.41 |
| | | Application Size | 24 KB |
| | MDI Smartphone Profiler | | |
| | | Application Version | 2.0 |
| | | Application Size | 33 KB |
| | WebViewerPersonal | | |
| | | Application Version | 3.5 |
| | | Application Size | 51 KB |
| | net_rim_bb_addressbook_ app | | |
| | | Application Version | 3.7.1.41 |
| | | Application Size | 68 KB |

Table 3 also comprises a number of individual profile portions including Hardware, Memory, Localization, Subscriber Information, and Software. These profile portions are similar to the hardware profile 310, software profile 312, etc. shown in Figure 3. In each of the profile portions of Table 3, a number of management objects are listed. For example, the Hardware profile portion of Table 3 lists management objects for Platform, Manufacturer, Model, IMEI, PIN, Horizontal Resolution, Vertical Resolution, Service Info, Color Display, Number of Colors, OS Major Version, OS Minor Version, OS Build Number, and OS Release Version. Each of these management objects may be accessed/updated in electronic devices such as, for example, the electronic device 107 of Figure 2, during a single device management session, using a device profile in accordance with a representative embodiment of the present invention.

Table 4, shown below, illustrates an exemplary device profile for an electronic device, that may correspond to, for example, the device profile 309 of Figure 3 for an electronic device such as, for example, the electronic device 107 of Figure 2, in accordance with a representative embodiment of the present invention. The device profile information shown in Table 4 may correspond, for example, to the device profile information for an electronic device based upon a Symbian operating system platform, for example.

**Table 4.**

| Profile | Management object | | Value |
|---|---|---|---|
| **Hardware** | Platform | | Symbian UIQ v7.0 |
| | Manufacturer | | SONY ERICSSON |
| | Model | | 7130501-BV |
| | Revision | | R2F CXC162002 |
| | OEM Info | | 270483595 |
| | Processor Family | | Quartz |
| | CPU Speed | | 152 MHz |
| | Processor | | THUMB |
| | Processor Revision | | 1 |
| | IMEI | | 350443-10-312134-9 |
| | IMSI | | 302370122280987 |
| | Backlight Enabled | | Yes |
| | Backlight State | | Off |
| | Horizontal Resolution | | 208 lines |
| | Vertical Resolution | | 320 lines |
| | Bluetooth | | Off |
| | Bluetooth name | | Sony Ericsson P800 |
| | Number of Colors | | 4096 colors |
| | OS Major Version | | 100 |
| | OS Build Version | | 100 |
| | Network Status | | Current |
| **Memory** | Internal Drive Name | | [C:] |
| | Maximum Size of Internal Drive | | 6139 KB |
| | Available Space on Internal Drive | | 3898 KB |
| | ROM Drive Name | | [Z:RomDrive] |
| | Maximum Size of ROM | | 22528 KB |
| | Available Space on ROM | | 0 KB |
| | RAM Drive Name | | [D:] |
| | Maximum Size of RAM | | 379 KB |
| | Available Space in RAM | | 376 KB |
| **Localization** | Time Format | | 12 Hour Format |
| | Date Format | | dd/mm/yyyy |
| | Daylight Saving | | Off |
| **Subscriber Information** | Cell ID | | 27129 |
| | Location Area Code | | 4900 |
| | Country Code | | 44 |
| | Network Country Code | | 302 |
| | Signal Strength | | 88 % |
| | Battery Strength | | 70 % |
| | Network Long Name | | ROGERS |
| | Network Short Name | | ROGERS |
| | Service Centre Address | | +17057969300 |
| **Group of Connections** | Access Point Name | | Internet.com |
| | Username | | wapser |
| | Password | | wapuser1 |
| | IP Address | | 0.0.0.0 |
| **Email Settings** | Alias | | MDI |
| | Outgoing Msg Encoding | | MIME |
| | Email Signature | | No |
| | Request Receipts | | No |
| | Alias | | MDI User |
| | Username | | mdiuser |
| | Password | | password |
| | Incoming Server | | gateway.mobilediagnostix.com |
| | Outgoing Server | | smtp.rogerswirelessdata.com |
| | Incoming Mail Port | | 123 |
| | Outgoing Mail Port | | 25 |
| | Email Address | | info@mobiledx.com |
| | Auto Send on Connect | | No |
| **WAP Settings** | Account Name | | ROGERSWAP |
| | Internet Account | | ROGERS |
| | Use Proxy | | No |
| | Address | | fido.wap.ca |
| | Port | | 9201 |
| | Username | | mdi |
| | Password | | password |
| | | | |
| **SMS Settings** | SMS Service Centre Address | | +17057969300 |
| | Character Ser | | 7Bit |
| | Connection Type | | GSM |
| **MMS Settings** | Service Centre Address | | +17057969300 |
| | WAP Account | | ROGERSWAP |
| | Automatic | | On |
| | Download Size | | No restrictions |
| | Validity Period | | Maximum |
| | Priority | | Normal |
| **Software** | Mix Pix | | |
| | | Application Status | Not Running |
| | | Application UID | 0x10005B63 |
| | Snake Ex | | |
| | | Application Status | Not Running |
| | | Application UID | 0x101F4CE8 |
| | File Manager | | |
| | | Application Status | Not Running |
| | | Application UID | 0x101F84EB |
| | Space Impact III | | |
| | | Application Status | Running |
| | | Application UID | 0x101D0538 |
| | SeleQ | | |
| | | Application Status | Not Running |
| | | Application UID | 0xB268993 |
| | DevMan | | |
| | | Application Status | Not Running |
| | | Application UID | 0x101FA9A1 |
| | MDI Smartphone Profiler | | |
| | | Application Status | Running |
| | | Application Version | 8.1.0 |
| | | Application UID | 0x101FF52F |

Table 4 also comprises a number of individual profile portions including Hardware, Memory, Localization, Subscriber Information, Group of Connection, Email Settings, WAP Settings, SMS Settings, MMS Settings, and Software. These profile portions are similar to the hardware profile 310, software profile 312, etc. shown in Figure 3. In each of the profile portions of Table 4, a number of management objects are listed. For example, the Hardware profile portion of Table 4 lists management objects for Platform, Manufacturer, Model, Revision, OEM Info, Processor Family, CPU Speed, Processor, Processor Revision, IMEI, IMSI, Backlight Enabled, Backlight State, Horizontal Resolution, Vertical Resolution, Bluetooth, Bluetooth name, Number of Colors, OS Major Version, OS Build Version, and Network Status. Each of these management objects may be accessed/updated in electronic devices such as, for example, the electronic device 107 of Figure 2, during a single device management session, using a device profile in accordance with a representative embodiment of the present invention.

In a representative embodiment of the present invention, a DM server such as, for example, the DM server 109 of Figure 2 may support a web services interface (WSI) for device management, that may be used by the customer care server 157 and other servers to access the electronic device 107, and to retrieve information such as the device profile information 309, from the electronic device 107. Thus, the network 105 may facilitate remote access, manipulation of software and hardware components, and management of the electronic device 107 in general, and the changeable parameters of the electronic device 107, in particular, using a DM server as a gateway for such access.

In addition to operators of the network 105, other 3^{rd} parties such as, for example, terminal and network manufacturers, enterprises, independent software vendors, content providers, and service providers may be allowed to access the electronic device 107. For example, the network 105 may permit the setting of parameters, the retrieval of information, etc., based on rights (e.g., access control list (ACL) rights) assigned to the 3^{rd} parties, and based on the operations the 3^{rd} parties are authorized to perform.

In a representative embodiment of the present invention, interaction between 3^{rd} party software vendor/service provider and the DM server 109 to initiate bulk operations such as, for example, updating configuration information in more than one electronic device 107, may be facilitated by means of web services. For example, all electronic devices of a certain make, a certain model, and/or a particular version may have some configuration information updated in a bulk operation. In another instance, a certain collection of electronic devices (e.g., of different makes) may be updated in bulk. Such an interface may provide the device management services typically employed by a network operator, for example. The network 105 may organize the web services interface so that external systems or entities are able to interact with the device management server 109, in order to access one or more electronic devices 107. Such entities may include, for example, the operator of the network 105, or some other authorized entity. I a representative embodiment of the present invention, a service provider such as, for example, the customer care server 157, or an external system (not shown), may initiate bulk operations. The service provider may interact with the DM server 109 to conduct the bulk operations. The service provider may also package and schedule the content provided by a content provider. The content may be made available from the download server 151 or from an external server, for delivery to a collection of electronic devices 107/users.

In a representative embodiment of the present invention, bulk operations invoked by a service provider may be performed as an asynchronous operation. For example, the DM server 109 may provide the service provider with an identifier such as, for example, a job identifier (ID), if the service provider does not provide an identifier itself when it invokes the bulk operation. The DM server 109 may subsequently communicate results of the bulk operation, and may associate the job ID with the results.

Figure 4 is a flowchart showing an exemplary work flow for the bulk operations support provided by the network 105 of Figure 2, in accordance with a representative embodiment of the present invention. At block 410, a service provider such as, for example, the customer care server 157 of Figure 2 may identify a bulk operation and a list of recipient electronic devices such as the electronic device 107 of Figure 2, for example. Next, at block 412, the service provider may communicate information about the bulk operation and the list of recipient electronic devices to a device management server such as the device management server 109 of Figure 2, for example. Then, at block 414, the device management server 109 may forward the information about the bulk operation to each of the recipient electronic devices 107. At block 416, each recipient electronic device 107 may receive information about the bulk operation, and may execute the operation on the electronic device 107. Each recipient electronic device may, at block 418, communicate the results of the bulk operation to the device management server 109, for example. In one representative embodiment of the present invention, the device management server 109, for example, may then collate the results received from the recipient electronic devices 107, at block 420. In another representative embodiment, the DM server 109 may immediately communicate each result received from the electronic devices 107 on the list of recipient devices, to the service provider. The service provider (e.g., customer care server 157) may then receive communications from the device management server 109 indicating the availability of the results of the bulk operations on the electronic devices 107 (block 422). Finally, at block 424, the service provider may retrieve the results of the bulk operations from the device management server 109.

In a representative embodiment of the present invention, the network 105 may facilitate interaction between an external system (not shown) and a device management server such as the DM server 109, for example. In a representative embodiment of the present invention, an external system may comprise, for example, a manufacturer of the electronic device 107, or a 3^{rd} party software vendor/service provider. The external system may indicate the type of information that is to be retrieved from a specified electronic device 107. The DM server 109, for example, may retrieve the information from the specified electronic device 107, and may communicate the information back to the external system. The type of information that may be retrieved includes standard OMA DM protocol management objects such as, for example, DevInfo, DevDetail, and DMAcc objects, as well as non-standard objects and dynamic objects that the external system wishes to retrieve from the electronic device 107. The DM server 109 may provide a WSI to external systems, that facilitates retrieval of information from an electronic device like electronic device 107 of Figure 2, for example. The WSI may accept device identification information, and information about one or more management objects, as parameters.

Figure 5 is a flowchart illustrating an exemplary method of operation of a network such as, for example, the network 105 of Figure 2, in facilitating access to information in an electronic device such as the electronic device 107, by an external system, in accordance with a representative embodiment of the present invention. At a first block 510, an external system may identify an electronic device such as, for example, the electronic device 107 of Figure 2, and data to be retrieved from the electronic device 107. Next, at block 512, the external system may communicate information identifying the electronic device 107 and the data to be retrieved, to a device management server such as, for example, the device management server 109 of Figure 2. In some representative embodiments of the present invention, this may be performed via a web services interface. At block 514, the device management server 109 may send information identifying the requested data to the selected electronic device 107. At block 516, the selected electronic device 107 may receive the information identifying the requested data, may retrieve the requested data from memory, and may communicate the requested data to the device management server 109. The device management server 109 may then, at block 518, collect the requested data from the selected electronic device 107. Next, the device management server 109 may forward the collected data to the external system (at block 520), and the external system may acknowledge to the device management server 109 the receipt of the requested data (at block 522). In an alternative representative embodiment of the present invention, the DM Server 109 may send a notification to the external system that the collected data is ready for delivery/pickup, when the electronic device 107 communicates the requested data to the DM server 109. In such a scenario, the external system may then retrieve the requested data from the DM Server 109.

In a representative embodiment of the present invention, a network such as, for example, the network 105 of Figure 2 may facilitate the interaction between a service provider such as, for example, the customer care server 157, and the DM server 109. For example, a customer care representative (CCR) such as CCR 159 of Figure 2, for example, that is handling a user's customer care call may retrieve information from an electronic device such as, for example, the electronic device 107 via the DM server 109, in order to determine the status of the electronic device 107, or the status of a service subscribed to by the user of the electronic device 107. In such a representative embodiment of the present invention, a customer care server such as the customer care server 157, for example, may retrieve a "device profile" (e.g., a multi-object retrieval), in contrast to performing retrieval of one information object (e.g., management object) at a time by a typical external system. In addition, the customer care server 157 may be allowed to retrieve an entire device management (DM) tree (not shown) from the electronic device 107. A DM tree may comprise, for example, an object addressable data structure in memory of the electronic device 107, that is accessed using a device management protocol such as the OMA DM protocol, discussed above. The customer care server 157 may also indicate a specific type of information that is to be retrieved from the specified electronic device 107. The DM server 109 may retrieve the required information from the specified electronic device 107, to communicate it back to the customer care server 157 (or, for example, to an external system, in general). The customer care server 157 may have a special trust relationship with the operator of the network 105, for example, especially if the customer care server 157 is managed by the operator of the network 105.

Similarly, in the case of an enterprise customer care system, a trusted relationship may exist between the enterprise customer care system and the DM server 109. The customer care server 157 may employ information from the electronic device 107, and may employ a web services interface (e.g., that may enable interaction with the DM server 109) to retrieve information from the device 107. In a representative embodiment of the present invention, a trusted relationship may exist between the customer care server 157 and the DM Server 109, thereby allowing the customer care server 157 to retrieve a multi-object device profile such as the device profile information 309 of Figure 3. Such device profile information may be defined by an original equipment manufacturer (OEM), for example, or by the operator of the network 105. The customer care server 157 may provide information identifying the electronic device 107 and management objects, etc. to be retrieved from the electronic device 107. The customer care server 157 may have rights to access individual portions of the device profile information such as, for example, the hardware profile 310, software profile 312, and subscriber profile 318, or to access an entire DM tree from the electronic device 107. A complete device profile such as, for example, the device profile 309 of Figure 3 may be retrievable as a default data set during retrieval of information from the electronic device 107.

Figure 6 is a flowchart illustrating an exemplary method of operation of a network such as, for example, the network 105 of Figure 2, in facilitating access to an electronic device such as, for example, the electronic device 107, from a customer care server like the customer care server 157 of Figure 2, in accordance with a representative embodiment of the present invention. At a first block 610, a customer care server such as, for example, the customer care server 157 of Figure 2 may identify a user, an electronic device of the user, and data to be retrieved. The electronic device may correspond to, for example, the electronic device 107 of Figure 2. In some representative embodiments of the present invention, the customer care server 157 may identify no data. Next, at block 612, the customer care server 157 may communicate information identifying the user, the electronic device of the user (e.g., electronic device 107), and the data to be retrieved, to a device management server such as, for example, the device management server 109 of Figure 2. The device management server 109 may then send information identifying the requested data to the identified electronic device 107, at block 614. The identified electronic device (e.g., electronic device 107) may receive the information identifying the requested data, may retrieve the requested data from memory, and may communicate the requested data to the device management server 109 (block 616). If no requested data was identified, the request may be assumed to be a request for the entire device profile, and information contained in a device profile such as, for example, the device profile 309 of Figure 3 of the electronic device 107 may be returned. Then at block 618, the device management server 109 may collect the requested data from the identified electronic device 107 and, at block 620, the device management server 109 may forward the collected data to the customer care server 157, for example. In an alternative representative embodiment of the present invention, the device management server 109 may send an entire device management tree to the customer care server 157. Transmission of some or all of the device management tree may be based upon an access control list (ACL). At block 622, the customer care server 157 may acknowledge to the device management server (e.g., device management server 109) the receipt of requested data from the electronic device (e.g., electronic device 107). The customer care server (e.g., customer care server 157) may then display the received data to the customer care representative 159, at block 624.

In a representative embodiment of the present invention, a network such as the network 105 of Figure 2, for example, may facilitate interaction between the electronic device 107 and a remote diagnostic server 173, a device manufacturer (not shown), or a 3^{rd} party software vendor/service provider (not shown), via the DM server 109, in order to determine the status of the electronic device 107 or of a service subscribed to by the user of the electronic device 107. Thus, the electronic device 107 may be assumed to be capable of collecting diagnostics information when instructed to do so by the DM server 109. The diagnostics information may subsequently be retrieved by the remote diagnostic server 173, the device manufacturer (not shown), or a 3^{rd} party software vendor/service provider, for example. In some representative embodiments of the present invention, the DM server 109 may deliver such collected information in a "push mode" to the remote diagnostic server 173, device manufacturer, or 3^{rd} party software vendor/service provider, for example.

The DM server 109 may retrieve diagnostics information from the specified electronic device 107, to communicate it back to the remote diagnostic server 173, device manufacturer, 3^{rd} party software vendor/service provider, for example. The electronic device 107 may start collecting diagnostics information when instructed to do so. In some representative embodiments of the present invention, the collected diagnostics information may be retrieved by, for example, the DM server 109, in order to communicate it to the diagnostic server 173, device manufacturer, or 3^{rd} party software vendor/service provider, for example.

Figure 7 is a flowchart illustrating an exemplary method of operation of a network such as, for example, the network 105 of Figure 2, in facilitating remote diagnostics of an electronic device such as, for example, the electronic device 107 from a customer care server like the customer care server 157 of Figure 2, in accordance with a representative embodiment of the present invention. The method of Figure 7 begins, at block 710, when a diagnostic server such as, for example, the diagnostics server 173 of Figure 2 identifies an electronic device and diagnostics data to be retrieved. The diagnostics server 173 may then communicate information identifying an electronic device such as, for example, the electronic device 107 of Figure 2, and the diagnostics data to be retrieved, to a device management server like the device management server 109, for example. In some representative embodiments of the present invention, the diagnostic server 173 may comprise a device manufacturer or a 3^{rd} party software vendor/service provider, for example. Next, at block 712, the diagnostics server 173 may communicate information identifying the electronic device 107 and the diagnostics data to be retrieved, to a device management server such as, for example, the device management server 109 of Figure 2. The diagnostics server 173 may, for example, employ a web services interface for such an exchange. The device management server 109 may then, at block 714, instruct the identified electronic device (e.g., electronic device 107 of Figure 2) to begin collecting diagnostic data. In a representative embodiment of the present invention, the identified electronic device (e.g., electronic device 107) may then receive information identifying requested diagnostics data, and may begin collecting the requested diagnostics data (at block 716). Later, the identified electronic device (e.g., electronic device 107 of Figure 2) may communicate the collected diagnostics data to the device management server 109, based on predetermined condition(s) (e.g., time or occurrence of an event). At block 720, the device management server 109 may receive the collected data from the identified electronic device 107. As described above, this communication may comprise wireless communication via, for example, a cellular, paging, wireless local, or wireless wide area network. In one representative embodiment of the present invention, the device management server 109 may then forward the collected data to the diagnostics server 173 (at block 722). In other representative embodiments, the device management server 109 may forward the collected data to the manufacturer of the electronic device 107 and/or to a 3^{rd} party software vendor/service provider, for example. Next, at block 724, the diagnostics server 173 (or device manufacturer, 3^{rd} party software vendor/service provider, etc.) may acknowledge to the device management server 109, the receipt of the requested data. The diagnostics server 173, for example, may then store the received data, at block 726.

In some representative embodiments of the present invention, the electronic device 107 may, for example, collect diagnostics information and wait for the DM server 109 to subsequently retrieve it. The DM server 109 may retrieve the collected diagnostics information when the diagnostics server 173, device manufacturer, 3^{rd} party software vendor/service provider explicitly request it. In other representative embodiments, the electronic device 107 may continue to collect diagnostics information and report it, periodically, to the DM server 109, for subsequent retrieval by the diagnostics server 173, device manufacturer, 3^{rd} party software vendor/service provider, etc. The DM server 109 may deliver the collected diagnostics information when the diagnostics server 173, device manufacturer, 3^{rd} party software vendor, etc. explicitly request it. Or, the diagnostics server 173, device manufacturer, 3^{rd} party software vendor/service provider may receive such diagnostics information when the DM server 109 delivers the diagnostics information (e.g., periodically). In yet another representative embodiment, the electronic device 107 may collect diagnostics information and may wait for the DM server 109 to subsequently retrieve it. The DM server 109 may retrieve the diagnostics information when retrieval is explicitly requested by the diagnostic server 173, device manufacturer, 3^{rd} party software vendor/service provider, after the collection of diagnostics data has been started.

In accordance with a representative embodiment of the present invention, the network 105 may facilitate the interaction between an electronic device 107 and an external system (not shown). The external system may track the occurrence of one or more events in the electronic device 107. The electronic device 107 may inform a device management server such as, for example, the DM server 109 of Figure 2 when an event occurs. The DM server 109, for example, may report the occurrence of the event(s) to the external system.

In a representative embodiment of the present invention. an external system may inform a device management server (e.g., the DM Server 109) of a desire to know of the occurrence of a specific event may occur in the electronic device 107. The DM Server 109, for example, may inform the electronic device 107 that it is to report on a specific event. When the electronic device 107 determines that the specific event has occurred, the electronic device 107 may report the occurrence to the DM server 109. The DM server 109 may, in turn, report the occurrence of the specific event back to the external system.

Figure 8 is a flowchart illustrating an exemplary method of operation of a network such as, for example, the network 105 of Figure 2, in facilitating monitoring of the occurrence of events in an electronic device such as, for example, the electronic device 107 of Figure 2, in accordance with a representative embodiment of the present invention. At block 810, the external system may identify an electronic device and event of interest, and may request that a device management server such as, for example, the device management server 109 of Figure 2 report the occurrence of the specified event on the specified electronic device. Next, at block 812, the device management server (e.g., device management server 109 of Figure 2) may communicate to the identified electronic device (e.g., the electronic device 107), information identifying the specified event, and may request notification of occurrence of the event. The identified electronic device may then, at block 814, monitor for the occurrence of the specified event. Upon occurrence of specified event, the identified electronic device (e.g., electronic device 107) may report the occurrence to a device management server such as, for example, the device management server 109 of Figure 2 (at block 816). Then, at block 818, the device management server 109 may report the occurrence of the specified event to external system. The external system may acknowledge to the device management server 109, at block 820, the receipt of the notification of occurrence of the specified event. It should be clear that although the method shown in Figure 8 refers to an event, that support for the monitoring of a single event is not a specific limitation of the present invention, and that simultaneously monitoring for a larger number of events is possible without departing from the scope of the present invention.

In a representative embodiment of the present invention, a customer care representative such as, for example, customer care representative 159 of Figure 2 may, with the help of the customer care server 157, initiate the collection of quality-of-service (QoS) related parameters from the electronic device 107, when the user of the electronic device 107 calls the customer care representative 159 to report a problem with the electronic device 107. The customer care server 157 may facilitate collection of, for example, fault incidence and repair information, fault incidence information, time taken to clear a fault, and accumulated down time of a device or service, to name only a few such QoS parameters. The customer care server 157 may also facilitate collection from the electronic device 107 of information related to, for example, network performance, call success rate within the network, service access delay information, call drop rate, and percentage of connections with good voice quality, to name only a few network-related QoS parameters.

In one representative embodiment of the present invention, the user/subscriber may be provided with the ability to go to a self-care website/portal such as, for example, the self-care website/portal 167 of Figure 2, to update a device profile, to provide subscriber information, and to access details of downloaded/downloadable software, for example. All such information provided by a user, or retrieved from an electronic device (e.g., electronic device 107 of Figure 2) during a self-care portal interaction, may subsequently be accessed by a customer care server such as, for example, the customer care system 157. In a representative embodiment of the present invention, whenever a user contacts a customer care representative (e.g., CCR 159 of Figure 2) and the customer care system 157 is able to interact with the electronic device of the caller, the customer care system 157 may automatically retrieve data previously entered and collected during a self-care activity at a self-care website/portal such as the self-care website/portal 167 shown in Figure 2.

In a network in accordance with a representative embodiment of the present invention, the user of an electronic device such as the electronic device 107, for example, may employ a self-care website/portal like the self-care website/portal 169 to administer self-care and conduct diagnostics of the electronic device 107. During a subsequent user call to a customer care representative, the customer care representative may use such information collected during user self-care activities, when interacting with the user of the electronic device 107.

In a representative embodiment of the present invention, an electronic device such as the electronic device 107 of Figure 2 may register itself with a device management server (e.g., the DM server 109), especially when the electronic device 107 comes onto the network 105 for the first time. When a new electronic device 107 comes into the network 105 for the first time, a DM server such as the DM server 109 may, for example, recognize a new electronic device identifier (ID), subscriber ID combination, and may register the associated electronic device and subscriber IDs in a registration database associated with the DM server 109. The registration of a new electronic device 107 may occur due to self-registration by the electronic device 107. In a self-registration, an electronic device like electronic device 107 may, for example, communicate its electronic device ID and subscriber ID to a device management server like the DM server 109, for example. Examples of electronic device IDs include, for example, an international mobile equipment identifier (IMEI) and an electronic serial number (ESN), to name only two. A subscriber ID may comprise any of a mobile identification number (MIN), an international mobile station identifier (IMSI), and a mobile station integrated service digital network (MSISDN) number, for example. A device management server like the DM server 109 of Figure 2 may capture the details of such electronic device initiated registrations. For example, the DM server 109 may use a rules-based engine, and may trigger off (i.e. initiate) one or more actions associated with the newly registered electronic device 107. In one representative embodiment of the present invention, the DM server 109 may look for a subscriber profile in a retail sales database in which subscriber profiles are captured/entered during sales activities (e.g., a subscriber purchasing the electronic device 107). This may occur at, for example, a retail outlet/center. In this manner, a DM server like DM server 109, for example, may retrieve subscriber profile information, subscription plan information, and also service profile information from a retail database. The DM server 109 may then host such retrieved information in its own database, or in an associated database.

In a representative embodiment of the present invention, following self-registration by a new electronic device 107, a DM server like DM server 109, for example, may interact with an external retailer database (or server) to correlate or associate with newly registered device registration information, other profile information retrieved from the retailer database. In addition, over a period of time, a DM server such as the DM server 109 of Figure 2 may track the number of transactions conducted by the electronic device/subscriber, track new associations created with the purchase, by the subscriber, of additional services, or other transaction.

A DM server in a representative embodiment of the present invention (e.g., DM server 109 of Figure 2) may, after self-registration by a new electronic device 107, interact with an external retailer database (or server) to retrieve demographic information for the user/subscriber that has been collected during the sales activity involving the user at a retail center or on a sales website. In addition, subsequent to such registration, a service usage profile for the user/subscriber comprising a history of interactions by the electronic device, and a transaction history by the subscriber, may be maintained and tracked by the DM server 109 or the customer care server 157, for example.

Aspects of the present invention may be seen in a communication device comprising communication circuitry that enables wireless communication with at least one remote server via a wireless network, at least one memory containing machine readable code executable by a processor, and at least one processor operably coupled to the communication circuitry and the at least one memory. The machine readable code may enable access, in separate device management sessions, to a plurality of management objects in accordance with an Open Mobile Alliance (OMA) device management (DM) protocol, and the machine readable code may also enable access, in a single device management session, to a device profile comprising the plurality of management objects. In various representative embodiments of the present invention, the wireless network may comprise one of the following: a cellular telephone network, a wireless wide area network, a wireless local area network, and a paging network. The at least one memory may comprise non-volatile memory, at least a portion of the device profile may be stored in the non-volatile memory, and the non-volatile memory may comprise flash-type memory.

In various representative embodiments of the present invention, the device profile may comprise a plurality of individual profiles, the plurality of individual profiles comprising one of the following: a hardware profile, a software profile, a configuration profile, a memory profile, a subscriber profile, a localization profile, and a connectivity profile. Individual profiles may be modified or added due to consumption of a newly subscribed service. The device profile may comprise at least one of the following: an Open Mobile Alliance (OMA) device management (DM) compliant ./Devlnfo management object and an OMA DM compliant ./DevDetail management object. The machine readable code may enable collection of one or more quality of service parameters related to operation of the communication device, and the collection of quality of service parameters may be automatically initiated based upon a physical location of the communication device. The collection of quality of service parameters may be initiated by one or more commands from the at least one remote server. The one or more quality of service parameters may comprise a signal strength, a measure of down-time of the communication device, a measure of dropped packages per download, and a measure of attempts per successful download. The one or more quality of service parameters may be retrievable from the communication device by the at least one remote server while the communication device is in use for a call session. The call session may be a voice call session.

In a representative embodiment of the present invention, the machine readable code may enable the communication device to establish a call session based upon information received from the at least one remote server, during which the communication device collects call session related data. In various representative embodiments of the present invention, the communication device may comprises one of the following: a cellular telephone, a pager, a personal digital assistant, and a personal computer. A value of a management object may be changed for a pre-defined period of time

Additional aspects of the present invention may be found in a system for remote management of a plurality of communication devices. Such as system may comprise a first server communicatively coupled to the plurality of communication devices via a wireless communication network. The first server may comprise executable code enabling access to management objects in the plurality of communication devices using an industry standardized device management protocol. The system may also comprise a second server communicatively coupled to the first server. The second server may comprise executable code enabling customer service activities for users of the plurality of communication devices. The first server may support a web services interface supporting invocation of device management activities by the second server. In various representative embodiments of the present invention, the plurality of communication devices may comprise one of the following: a cellular telephone, a pager, a personal digital assistant, and a personal computer, and the wireless communication network may comprise one of the following: a cellular telephone network, a wireless wide area network, a wireless local area network, and a paging network. The industry standardized device management protocol may comprise an Open Mobile Alliance (OMA) device management (DM) protocol.

In a representative embodiment of the present invention, the web services interface ma be remotely accessible, via a communication network. Each communication device may comprise a device profile that enables access, in a single device management session, to a plurality of management objects. The system may provide a job identifier for device management activities invoked via the web services interface, and associate a job identifier with device management activities invoked via the web services interface. The first server and the second server may be the same server.

In a representative embodiment of the present invention, the system may send notification of completion of invoked device management activities, via the web services interface, and the notification may be sent following receipt of a device management result from at least one of the plurality of communication devices. The second server may provide to the first server, information identifying at least one communication device and at least one management object to be retrieved from the identified at least one communication device, and the first server may retrieve a default set of management objects if information identifying at least one management object is not received. A system in accordance with a representative embodiment of the present invention may also comprise a third server communicatively coupled to the first server. The third server may comprise executable code enabling diagnostics activities with the plurality of communication devices. The system may enable collection of diagnostics information related to operation of at least one of the plurality of communication devices. The system may enable reporting occurrence of a specified event on at least one of the plurality of communication devices, and reporting may be enabled based upon a request from outside the system. The system may notify a remote server external to the system, upon receiving a report from the at least one of the plurality of communication devices of the occurrence of the specified event. One or more management objects in the one of the plurality of communication devices may be accessible to a user of one of the plurality of communication devices, via a web portal, and the one or more management objects accessed by the user may be accessible to the second server.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A communication device comprising:
communication circuitry that enables wireless communication with at least one remote server via a wireless network;
at least one memory containing machine readable code executable by a processor;
at least one processor operably coupled to the communication circuitry and the at least one memory;
wherein the machine readable code enables access, in separate device management sessions, to a plurality of management objects in accordance with an Open Mobile Alliance (OMA) device management (DM) protocol; and
wherein the machine readable code also enables access, in a single device management session, to a device profile comprising the plurality of management objects.

2. The communication device according to claim 1, wherein the wireless network comprises one of the following: a cellular telephone network, a wireless wide area network, a wireless local area network, and a paging network.

3. The communication device according to claim 1, wherein the at least one memory comprises non-volatile memory, and wherein at least a portion of the device profile is stored in the non-volatile memory.

4. The communication device according to claim 3, wherein the non-volatile memory comprises flash-type memory.

5. The communication device according to claim 1, wherein the device profile comprises a plurality of individual profiles, the plurality of individual profiles comprising one of the following: a hardware profile, a software profile, a configuration profile, a memory profile, a subscriber profile, a localization profile, and a connectivity profile.

6. The communication device according to claim 5, wherein individual profiles are modified or added due to consumption of a newly subscribed service.

7. The communication device according to claim 1, wherein the device profile comprises at least one of the following: an Open Mobile Alliance (OMA) device management (DM) compliant ./DevInfo management object and an OMA DM compliant ./DevDetail management object.

8. The communication device according to claim 1, wherein the machine readable code enables collection of one or more quality of service parameters related to operation of the communication device.

9. The communication device according to claim 8, wherein the collection of quality of service parameters is automatically initiated based upon a physical location of the communication device.

10. The communication device according to claim 8, wherein the collection of quality of service parameters is initiated by one or more commands from the at least one remote server.

11. The communication device according to claim 8, wherein the one or more quality of service parameters comprise a signal strength, a measure of down-time of the communication device, a measure of dropped packages per download, and a measure of attempts per successful download.

12. The communication device according to claim 8, wherein the one or more quality of service parameters are retrievable from the communication device by the at least one remote server while the communication device is in use for a call session.

13. The communication device according to claim 12, wherein the call session is a voice call session.

14. The communication device according to claim 1, wherein the machine readable code enables the communication device to establish a call session based upon information received from the at least one remote server, during which the communication device collects call session related data.

15. The communication device according to claim 1, wherein the communication device comprises one of the following: a cellular telephone, a pager, a personal digital assistant, and a personal computer.

16. The communication device according to claim 1, wherein a value of a management object is changed for a pre-defined period of time.

17. A system for remote management of a plurality of communication devices, the system comprising:
a first server communicatively coupled to the plurality of communication devices via a wireless communication network, the first server comprising executable code enabling access to management objects in the plurality of communication devices using an industry standardized device management protocol;
a second server communicatively coupled to the first server, the second server comprising executable code enabling customer service activities for users of the plurality of communication devices; and
wherein the first server supports a web services interface supporting invocation of device management activities by the second server.

18. The system according to claim 17, wherein the plurality of communication devices comprises one of the following: a cellular telephone, a pager, a personal digital assistant, and a personal computer.

19. The system according to claim 17, wherein the wireless communication network comprises one of the following: a cellular telephone network, a wireless wide area network, a wireless local area network, and a paging network.

20. The system according to claim 17, wherein the industry standardized device management protocol comprises an Open Mobile Alliance (OMA) device management (DM) protocol.

21. The system according to claim 17, wherein the web services interface is remotely accessible, via a communication network.

22. The system according to claim 17, wherein each communication device comprises a device profile that enables access, in a single device management session, to a plurality of management objects.

23. The system according to claim 17, wherein the system provides a job identifier for device management activities invoked via the web services interface.

24. The system according to claim 17, wherein the system associates a job identifier with device management activities invoked via the web services interface.

25. The system according to claim 17, wherein the first server and the second server are the same server.

26. The system according to claim 17, wherein the system sends notification of completion of invoked device management activities, via the web services interface.

27. The system according to claim 26, wherein the notification is sent following receipt of a device management result from at least one of the plurality of communication devices.

28. The system according to claim 17, wherein the second server provides to the first server, information identifying at least one communication device and at least one management object to be retrieved from the identified at least one communication device.

29. The system according to claim 28, wherein the first server retrieves a default set of management objects if information identifying at least one management object is not received.

30. The system according to claim 17, further comprising:
a third server communicatively coupled to the first server, the third server comprising executable code enabling diagnostics activities with the plurality of communication devices.

31. The system according to claim 17, wherein the system enables collection of diagnostics information related to operation of at least one of the plurality of communication devices.

32. The system according to claim 17, wherein the system enables reporting occurrence of a specified event on at least one of the plurality of communication devices.

33. The system according to claim 32, wherein reporting is enabled based upon a request from outside the system.

34. The system according to claim 32, where the system notifies a remote server external to the system, upon receiving a report from the at least one of the plurality of communication devices of the occurrence of the specified event.

35. The system according to claim 17, wherein one or more management objects in the one of the plurality of communication devices is accessible to a user of one of the plurality of communication devices, via a web portal.

36. The system according to claim 35, wherein the one or more management objects accessed by the user are accessible to the second server.
